# EUROPEAN PATENT APPLICATION

(11) **EP 2 860 843 A1**
(43) Date of publication of application: **15.04.2015**
(21) Application number: 13800998.0
(22) Date of filing: 08.04.2013
(51) Int. Cl.: H02J 7/00, H02J 17/00, H04M 1/00, H04M 11/00

(54) **INFORMATION PROVIDING SYSTEM AND INFORMATION PROVIDING METHOD**

(30) Priority: 07.06.2012 JP 2012129829
(71) Applicant: NEC CASIO Mobile Communications, Ltd., Kawasaki-shi, Kanagawa 211-8666 (JP)
(72) Inventor: KUDOU, Hiroshi, Kawasaki-shi Kanagawa 211-8666 (JP)
(74) Representative: Vossius & Partner
(86) International application number: PCT/JP2013/060644
(87) International publication number: WO 2013/183352

(57) **Abstract**

An information provision system includes a charging apparatus that charges an electronic apparatus; and an information provision apparatus that communicates with the charging apparatus. The charging apparatus includes charging means that charges the electronic apparatus; and control means that receives first information from the electronic apparatus, and that transmits the first information to the information provision apparatus. The information provision apparatus includes holding means that holds information that is to be provided and second information related to the first information, and providing means that transmits the second information related to the first information in the holding means to the electronic apparatus via the charging apparatus upon receiving the first information from the charging apparatus, and that transmits the information that is to be provided in the holding means to the electronic apparatus but not via the charging apparatus when a predetermined time to make a transmission is reached.

## Description

### Technical Field

The present invention relates to an information provision system and an information provision method, and in particular to an information provision system including a charging apparatus for charging an electronic apparatus and an information provision method.

### Background Art

There exists a terminal equipment whose charging terminal, which has low water resistant properties, is covered and which is charged in a non-contact charging manner, in order to enhance water resistant properties (hereinafter referred to as a "non-contact charged terminal").

Patent Literature 1 describes a customer service system including a charging apparatus that charges a non-contact charged terminal in a non-contact charging manner and that communicates with the non-contact charged terminal, and an information processing apparatus that communicates with this charging apparatus.

In the customer service system described in Patent Literature 1, the information processing apparatus receives information about the non-contact charged terminal via the charging apparatus and provides information according to the information for the non-contact charged terminal via the charging apparatus.

### Citation List

### Patent Literature

Patent Literature 1: JP2010-152633A

### Summary of Invention

### Technical Problem

The customer service system described in Patent Literature 1 has a problem in which the information processing apparatus can provide information to the non-contact charged terminal only when the non-contact charged terminal is in a state in which it can communicate with the charging apparatus (for example, in a state in which the non-contact charged terminal is placed on the charging apparatus).

An object of the present invention is to provide an information provision system and an information provision method that can solve the above problem.

### Solution to Problem

An information provision system according to the present invention is an information provision system including: a charging apparatus that charges an electronic apparatus; and an information provision apparatus that communicates with the charging apparatus, wherein
the charging apparatus includes
charging means that charges the electronic apparatus, and
control means that receives first information from the electronic apparatus, and that transmits the first information to the information provision apparatus, and wherein
the information provision apparatus includes
holding means that holds information that is to be provided and second information related to the first information, and
providing means that transmits the second information related to the first information in the holding means to the electronic apparatus via the charging apparatus upon receiving the first information from the charging apparatus, and that transmits the information that is to be provided in the holding means to the electronic apparatus, but not via the charging apparatus when a predetermined time to make a transmission is reached.

An information provision method according to the present invention is an information provision method performed by an information provision system including a charging apparatus that charges an electronic apparatus and an information provision apparatus that communicates with the charging apparatus, the method including:
the charging apparatus charging the electronic apparatus;
the charging apparatus receiving first information from the electronic apparatus, and transmitting the first information to the information provision apparatus;
the information provision apparatus holding information that is to be provided and second information related to the first information in holding means; and
the information provision apparatus transmitting the second information related to the first information in the holding means to the electronic apparatus via the charging apparatus upon receiving the first information from the charging apparatus, and transmitting the information that is to be provided in the holding means to the electronic apparatus, but not via the charging apparatus when a predetermined time to make a transmission is reached.

### Advantageous Effect of Invention

According to the present invention, an information processing apparatus can provide information to an electronic apparatus such as a non-contact charged terminal even when the electronic apparatus is not in a state in which it can communicate with a charging apparatus.

### Brief Description of Drawings

[Figure 1] Figure 1 shows an information provision system of an exemplary embodiment according to the present invention.
[Figure 2] Figure 2 is a diagram showing an example of charging apparatus 2.
[Figure 3] Figure 3 is a sequence diagram for illustrating an operation of transmitting event day information.
[Figure 4] Figure 4 is a sequence diagram for illustrating an operation performed when mobile terminal 1 is placed on placing base 23 of charging apparatus 2.

### Description of Embodiment

An exemplary embodiment according to the present invention will be described below with reference to the drawings.

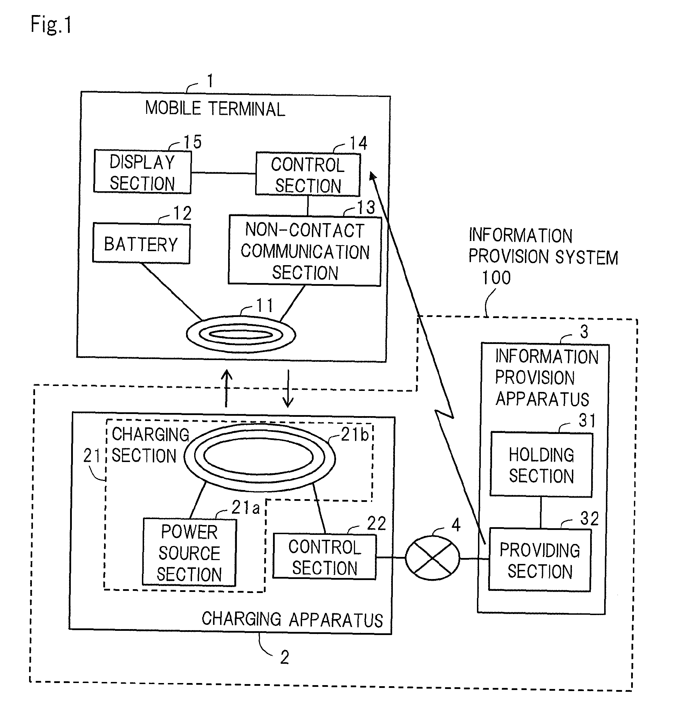

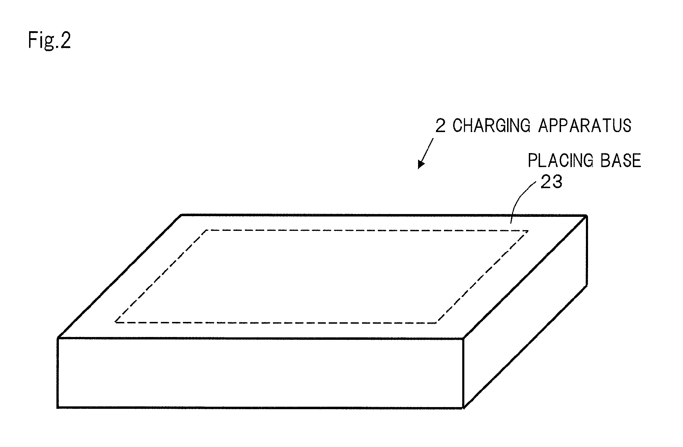

Figure 1 is a diagram showing information provision system 100 of an exemplary embodiment according to the present invention. Figure 2 is a diagram showing an example of charging apparatus 2.

In Figures 1 and 2, information provision system 100 includes charging apparatus 2 that charges mobile terminal 1, and information provision apparatus 3 that communicates with charging apparatus 2. Information provision apparatus 3 communicates with charging apparatus 2 via network 4. Information provision apparatus 3 may communicate with charging apparatus 2 not via network 4.

In the present exemplary embodiment, information provision system 100 is managed by a service provider that provides services for a user of mobile terminal 1, and charging apparatus 2 is installed in a store that is run by the service provider. The administrator of information provision system 100 is not limited to the service provider that provides services for the user of mobile terminal 1 but may be changed as appropriate. The installation location of charging apparatus 2 is not limited to the store that is run by the service provider but may be changed as appropriate.

A restaurant will be used as an example of the store that is run by the service provider. The store that is run by the service provider is not limited to the restaurant, but may be changed as appropriate to, for example, a clothing store or a food store.

Mobile terminal 1 includes power reception antenna 11, battery 12, non-contact communication section 13, control section 14 and display section 15. Charging apparatus 2 includes charging section 21, control section 22 and placing base 23. Charging section 21 includes power source section 21a and power transmission antenna 21b. Charging section 21 and control section 22 are provided inside placing base 23. Information provision apparatus 3 includes holding section 31 and providing section 32.

Mobile terminal 1 is an example of an electronic apparatus. Mobile terminal 1 is, for example, a mobile phone, a smartphone, a tablet terminal, a game machine or a notebook PC (personal computer).

Power reception antenna 11 is a coil. When arranged close to and opposite to power transmission antenna 21b of charging apparatus 2, power reception antenna 11 receives power, which is generated in power transmission antenna 21b, by electromagnetic induction, charges battery 12 with the power via a circuit (not shown), and supplies the power to non-contact communication section 13. In the present exemplary embodiment, when mobile terminal 1 is arranged on placing base 23, power reception antenna 11 receives power, which is generated in power transmission antenna 21b, by electromagnetic induction.

Battery 12 is used as a power source of mobile terminal 1.

Non-contact communication section 13 stores, for example, attribute information (for example, age, sex and information that indicates services used by a user) about the user of mobile terminal 1. The user attribute information is an example of first information.

When the power is supplied from power reception antenna 11 to non-contact communication section 13, non-contact communication section 13 transmits the user attribute information to charging apparatus 2 via power reception antenna 11.

Control section 14 has a wireless communication function for transmitting and receiving e-mails and the like and controls mobile terminal 1.

Display section 15 executes various kinds of displays.

Charging section 21 in charging apparatus 2 is an example of charging means. Charging section 21 charges mobile terminal 1.

Power source section 21a supplies an electric current to power transmission antenna 21b, which is a coil, to drive power transmission antenna 21b.

Control section 22 is an example of control means. Control section 22 controls charging apparatus 2.

For example, control section 22 receives the user attribute information from mobile terminal 1 via power transmission antenna 21b and transmits the user attribute information to information processing apparatus 3 via network 4.

Holding section 31 in information provision apparatus 3 is an example of holding means.

Holding section 31 holds, for each piece of user attribute information, goods information related to the user attribute information. In the present exemplary embodiment, holding section 31 holds the number of orders of each menu item for each piece of the user attribute information (age, sex and the like) as goods information related to the user attribute information. The goods information is an example of second information.

In the present exemplary embodiment, when an order for an item that is selected from a menu is received in the store where charging apparatus 2 is installed, the ordered menu item and attribute information about the user who placed the order are inputted to a store terminal (not shown) that is used in the store. The store terminal transmits the ordered menu item and the attribute information about the user who placed the order, to information provision apparatus 3. Providing section 32 in information provision apparatus 3 aggregates information from the store terminal for each item on the menu that corresponds to each piece of user attribute information and stores an aggregation result in holding section 31 as the goods information.

If the goods information is already held in holding section 31, providing section 32 aggregates information from the store terminal and the goods information in holding section 31 for each item on the menu that corresponds to each piece of user attribute information and updates the goods information in holding section 31 to new goods information which is the aggregation result.

Holding section 31 also holds event day information that indicates a special service event day of the store where charging apparatus 2 is installed. The event day information is an example of information that is to be provided. The information that is to be provided is not limited to the event day information but may be changed as appropriate. In the present exemplary embodiment, the importance of the event day information is lower than the importance of the goods information.

Providing section 32 is an example of providing means. Providing section 32 controls information provision apparatus 3.

For example, upon receiving the user attribute information from charging apparatus 2, providing section 32 refers to holding section 31 to identify the goods information related to the user attribute information (the number of orders of each menu item related to the user attribute information). Then, providing section 32 extracts the top n (n is an integer equal to 1 or more) menu items from the number of orders of the identified goods information as recommended menu items. Then, providing section 32 transmits the recommended items to mobile terminal 1 via charging apparatus 2.

When a predetermined time (for example, a week before a special service event day) for making a transmission is reached, providing section 32 transmits event day information in holding section 31 to mobile terminal 1 by e-mail. A mail address of mobile terminal 1 is registered with holding section 31 in advance, and providing section 32 acquires the mail address of mobile terminal 1 from holding section 31.

Next, an operation will be described.

In the description below, it is assumed that charging apparatus 2 is arranged on each table of the restaurant, and that the predetermined transmission timing is a week before the special service event day. The place where charging apparatus 2 is installed is not limited to each table of the restaurant, and the predetermined transmission timing is not limited to a week before the special service event day.

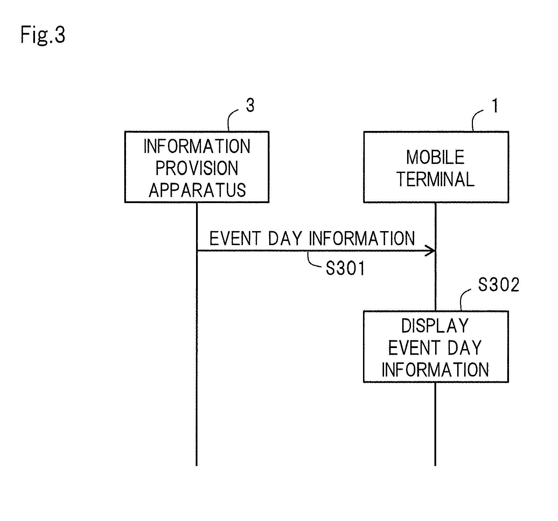

Figure 3 is a sequence diagram for illustrating an operation of transmitting the event day information.

One week before the special service event day of the restaurant, providing section 32 transmits an e-mail that includes event day information in holding section 31 to mobile terminal 1 (step S301).

Control section 14 of mobile terminal 1 receives the e-mail which includes the event day information. Then, in response to an operation by the user of mobile terminal 1, the event day information is displayed on display section 15 (step S302). Thus, the user of mobile terminal 1 can know the special service event day of the restaurant from the event day information.

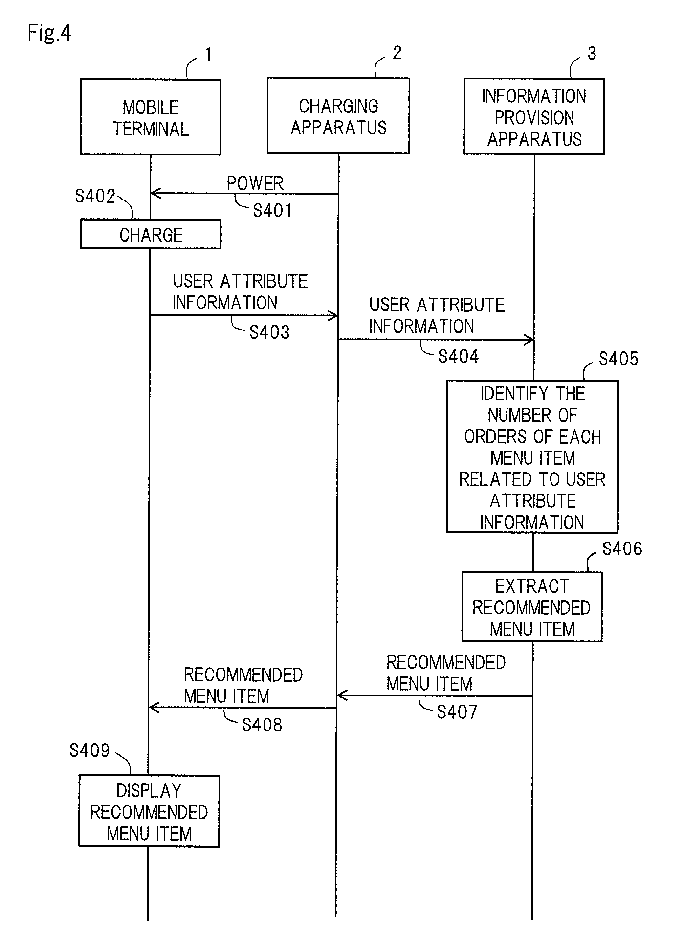

Figure 4 is a sequence diagram for illustrating an operation performed when mobile terminal 1 is placed on placing base 23 of charging apparatus 2.

When the user of mobile terminal 1 visits the restaurant on the special service event day of the restaurant and places mobile terminal 1 on placing base 23 that is arranged on a table, power reception antenna 11 in mobile terminal 1 receives the power from power transmission antenna 21b in charging apparatus 2 (step S401). The power received by power transmission antenna 21b is supplied to battery 12 and non-contact communication section 13.

Battery 12 is charged with power from power transmission antenna 21b (step S402).

Meanwhile, upon receiving the power from power reception antenna 11, non-contact communication section 13 transmits the user attribute information to charging apparatus 2 via power reception antenna 11 (step S403).

Upon receiving the user attribute information (age, sex and the like) via power transmission antenna 21b, control section 22 of charging apparatus 2 transmits the user attribute information to information processing apparatus 3 via network 4 (step S404).

Upon receiving the user attribute information from charging apparatus 2, providing section 32 of information processing apparatus 3 refers to holding section 31 and identifies the number orders of each menu related to the user attribute information (step S405).

Next, providing section 32 extracts the top n menu items from the number of orders of the identified goods information as recommended menu items (step S406).

Next, providing section 32 transmits the recommended menu items destined to mobile terminal 1, to charging apparatus 2 (step S407). In the present exemplary embodiment, recommended menu items, which include an instruction to transmit the recommended menu items to a mobile terminal that can communicate with charging apparatus 2, are used as the recommended menu items destined to mobile terminal 1.

Upon receiving the recommended menu items destined to mobile terminal 1, control section 22 of charging apparatus 2 transmits the recommended menu items to mobile terminal 1 using power transmission antenna 21b (step S408).

Power reception antenna 11 of mobile terminal 1 receives the recommended menu items from charging apparatus 2. Upon receiving the recommended menu items via power reception antenna 11, non-contact communication section 13 outputs the recommended menu items to control section 14. Upon receiving the recommended menu items, control section 14 displays the recommended menu items on display section 15.

Next, advantageous effects of the present exemplary embodiment will be described.

According to the present exemplary embodiment, charging section 21 charges mobile terminal 1. Control section 22 receives the user attribute information from mobile terminal 1 and transmits the user attribute information to information provision apparatus 3. Holding section 31 holds the event day information and the goods information related to the user attribute information. Upon receiving the user attribute information from charging apparatus 2, providing section 32 transmits the goods information related to the user attribute information, in holding section 31, to mobile terminal 1 via charging apparatus 2. When a predetermined time to make a transmission is reached, providing section 32 transmits the event day information in holding section 31 to mobile terminal 1 but not via charging apparatus 2.

Therefore, information processing apparatus 3 can provide information for mobile terminal 1 even when mobile terminal 1, such as a non-contact charged terminal, is not in a state in which it can communicate with charging apparatus 2.

Between the case of transmitting information to mobile terminal 1 via charging apparatus 2 and the case of transmitting information to mobile terminal 1 not via charging apparatus 2, providing section 32 changes the information that is to be transmitted. Thus, it becomes possible to change information that is to be transmitted according to different transmission routes.

In the present exemplary embodiment, the importance of goods information is higher than the importance of event day information. Therefore, mobile terminal 1 can receive information with high importance provided by information provision apparatus 3 only via charging apparatus 2. Accordingly, in order to obtain the information with high importance, it is necessary for the user of mobile terminal 1 to make mobile terminal 1 communicate with charging apparatus 2. Thus, it is possible to motivate the user of mobile terminal 1 to visit the place (for example, a store) where charging apparatus 2 has been installed.

In the present exemplary embodiment, charging section 21 charges mobile terminal 1 in a non-contact manner. Therefore, it becomes possible to use a non-contact charged terminal as mobile terminal 1, and it becomes possible to provide information for the non-contact charged terminal even when the non-contact charged terminal is not in a state in which it can communicate with charging apparatus 2.

The above exemplary embodiment may be changed as described below.

Holding section 31 further holds goods information related to attribute information about a plurality of users. For example, holding section 31 holds menu items for families as goods information related to the attribute information about the plurality of users. The goods information related to the attribute information about the plurality of users is an example of third information.

A plurality of mobile terminals 1 can be placed on placing base 23. Upon receiving user attribute information from each mobile terminal 1 that has been placed on placing base 23, control section 22 transmits the attribute information about the plurality of users to information provision apparatus 3.

Upon receiving the attribute information about the plurality of users from charging apparatus 2, providing section 32 transmits goods information related to the attribute information about the plurality of users in holding section 31 (for example, menu items for families) to the plurality of mobile terminals 1 via charging apparatus 2. For example, providing section 32 transmits the goods information related to the attribute information about the plurality of users destined to the plurality of mobile terminals 1, to charging apparatus 2.

In this case, it becomes possible to provide goods information corresponding to the plurality of users.

The above exemplary embodiment may be also changed as described below.

Upon receiving the menu item ordered by the user of mobile terminal 1 and, then, receiving the recommended menu items from information provision apparatus 3, control section 22 changes the recommended menu items on the basis of the menu item, which has been ordered, to generate changed recommended menu items, and transmits the recommended menu of items that have been changed to mobile terminal 1. For example, if receiving the recommended menu items after receiving an order of a main dish, control section 22 generates changed recommended menu items that indicate only dessert menu items among the recommended menu items and transmits the changed recommended menu items to mobile terminal 1.

In this case, it becomes possible to cause information that is to be provided for mobile terminal 1 to be information that has a stronger possibility of being needed by the user of mobile terminal 1.

In the above exemplary embodiment, a plurality of communication media may exist between mobile terminal 1 and information provision apparatus 3. For example, 3G (Generation) and Wi-Fi (wireless fidelity) may be used as the communication media between mobile terminal 1 and information provision apparatus 3.

In this case, providing section 32 transmits the event day information to mobile terminal 1 using 3G while detecting that the user of mobile terminal 1 is in the vicinity of the store and transmits such welcome information that can prompt the user to visit the store with high probability (for example, information indicating some special goods) to mobile terminal 1, using Wi-Fi the communication whose area is limited in comparison with 3G.

Though electromagnetic induction method is used as the non-contact charging method in the above exemplary embodiment, the non-contact charging method is not limited to the electromagnetic induction method. For example, a radio-wave reception method or resonance method may be used as the non-contact charging method.

Furthermore, though the antenna that is used for non-contact charging also serves as an antenna that is used for information communication in the above exemplary embodiment, the antenna that is used for non-contact charging and the antenna that is used for information communication may be separately provided.

In the exemplary embodiment described above, the shown configuration is only an example, and the present invention is not limited to the configuration.

Though the present invention has been described with reference to the exemplary embodiment, the invention is not limited to the above exemplary embodiment. Various changes understandable to one skilled in the art may be made to the configuration and details of the invention within the scope of the invention. This application claims priority based on Japanese Patent Application No. 2012-129829 filed on June 7, 2012, the disclosure of which is hereby incorporated by reference thereto in its entirety.

### Reference Signs List

- 100: information provision system
- 1: mobile terminal
- 11: power reception antenna
- 12: battery
- 13: non-contact communication section
- 14: control section
- 15: display section
- 2: charging apparatus
- 21: charging section
- 21a: power source section
- 21b: power transmission antenna
- 22: control section
- 23: placing base
- 3: information provision apparatus
- 31: holding section
- 32: providing section

## Claims

1. An information provision system comprising:
a charging apparatus that charges an electronic apparatus; and
an information provision apparatus that communicates with said charging apparatus, wherein:
said charging apparatus comprises;
charging means that charges the electronic apparatus, and
control means that receives first information from the electronic apparatus, and that transmits the first information to said information provision apparatus, and wherein:
said information provision apparatus comprises;
holding means that holds information that is to be provided and second information related to the first information, and
providing means that transmits the second information related to the first information in the holding means to the electronic apparatus via said charging apparatus upon receiving the first information from said charging apparatus, and that transmits the information that is to be provided in said holding means to the electronic apparatus but not via said charging apparatus when a predetermined time to make a transmission is reached.

2. The information provision system according to claim 1, wherein importance of the second information is higher than importance of the information that is to be provided.

3. The information provision system according to claim 1 or 2, wherein
the first information is attribute information about a user of the electronic apparatus,
said holding means further holds third information related to attribute information about a plurality of users,
upon receiving the user attribute information from a plurality of the electronic apparatuses, the control means transmits the plurality of pieces of user attribute information to said information provision apparatus, and
upon receiving the plurality of pieces of user attribute information from said charging apparatus, the providing means transmits the third information related to the plurality of pieces of user attribute information in said holding means, to the electronic apparatus via said charging apparatus.

4. The information provision system according to any one of claims 1 to 3, wherein the control means further receives input information, and, upon subsequently receiving the second information, changes the second information on the basis of the input information to generate changed information and transmits the changed information to the electronic apparatus.

5. The information provision system according to any one of claims 1 to 4, wherein the charging means charges the electronic apparatus in a non-contact manner.

6. An information provision method performed by an information provision system including a charging apparatus that charges an electronic apparatus and an information provision apparatus that communicates with the charging apparatus, the method comprising:
the charging apparatus charging the electronic apparatus;
the charging apparatus receiving first information from the electronic apparatus, and transmitting the first information to the information provision apparatus;
the information provision apparatus holding information that is to be provided and second information related to the first information in holding means; and
the information provision apparatus transmitting the second information related to the first information in the holding means to the electronic apparatus via the charging apparatus upon receiving the first information from the charging apparatus, and transmitting the information that is to be provided in the holding means to the electronic apparatus but not via the charging apparatus when a predetermined time to make a transmission is reached.
